# EUROPÄISCHE PATENTSCHRIFT

(11) **EP 3 499 071 B1**
(45) Veröffentlichungstag und Bekanntmachung des Hinweises auf die Patenterteilung: **23.02.2022**
(21) Anmeldenummer: 17207293.6
(22) Anmeldetag: 14.12.2017
(51) Int. Cl.: F16D 55/2255, F16D 65/18

(54) **ZUSPANNVORRICHTUNG FÜR EINE SCHEIBENBREMSE UND LAGERSCHALE FÜR EINE ZUSPANNVORRICHUNG EINER SCHEIBENBREMSE**
CLOSING DEVICE FOR A DISC BRAKE AND BEARING FOR A CLOSING DEVICE OF A DISC BRAKE
DISPOSITIF D'APPLICATION DU FREIN POUR UN FREIN À DISQUE ET COUSSINET DE PALIER POUR UN DISPOSITIF D'APPLICATION DU FREIN D'UN FREIN À DISQUE

(43) Veröffentlichungstag der Anmeldung: 19.06.2019
(73) Patentinhaber: ZF CV Systems Europe BV, 1170 Brussels (BE)
(72) Erfinder: Jungmann, Hans-Christian, 69517 Gorxheimertal (DE); Scherer, Vitalij, 69181 Leimen (DE)
(74) Vertreter: Copi, Joachim

(56) Entgegenhaltungen:
- WO-A1-96/36819
- DE-A1- 10 236 606
- DE-A1-102014 115 762

## Beschreibung

Die Erfindung betrifft eine Zuspannvorrichtung für eine Scheibenbremse, insbesondere für eine Gleitsattelscheibenbremse eines Nutzfahrzeuges zum Zuspannen einer Bremsscheibe. Die Scheibenbremse weist zumindest einen Bremssattel zur Aufnahme der Zuspannvorrichtung und Bremsbeläge zum Zuspannen der Bremsscheibe auf. Weiterhin umfasst die Zuspannvorrichtung einen Zuspannhebel mit zumindest einem Zuspannhebelfuß. Der Zuspannhebelfuß weist in Richtung der dem Bremsbelag zugewandten Seite oder der dem Bremsbelag abgewandten Seite eine Vertiefung zur Aufnahme einer Lagerschale auf.

Die als Zuspanneinrichtung bezeichnete Zuspannvorrichtung der DE102010044911A1 weist einen schwenkbaren Hebel mit einem als Exzenter ausgebildeten Abstützbereich auf. In einer Mulde des Abstützbereichs liegt eine Lagerschale, wobei die Lagerschale durch einen Wälzrollenhalter gehalten wird. Der Wälzrollenhalter ist durch Nieten an dem Abstützbereich befestigt. Für eine Demontage müssen die Nieten zerstört werden.

Ein anderes Verfahren zur Befestigung der Lagerschalen an dem Zuspannhebel geht aus der DE102012006089A1 hervor. Dabei weist der Zuspannhebel an den Abstützbereichen eine Gabelform auf. Die Abstützbereiche sind als Exzenterabschnitte ausgebildet. Die Exzenterabschnitte stützen sich über die als Schwenklager bezeichneten Lagerschalen an jeweils einen Stützstift ab. Der Stützstift stützt sich an der Innenseite des Bremssattels ab.

Zudem zeigt die WO04074705A1 eine Zuspannvorrichtung mit einem Zuspannhebel. Dabei sind die Lagerschalen fest mit einem als Exzenter ausgebildeten Abstützbereich verbunden. Eine Wälzrolle liegt in dem Lager an. Die Lagerschale, die Wälzrolle und eine Aufnahme bilden ein Lager. Eine Fixierung des Lagers wird über einen Wälzrollenhalter erreicht. Der Wälzrollenhalter weist Laschen auf, in denen Lagerzapfen der Wälzrolle einliegen. Die Lagerschale ist mittels Zapfen in Bohrlöcher des Abstützbereichs fest eingepresst.

Auch aus der DE102010005909A1 geht eine Zuspannvorrichtung mit einem Zuspannhebel und Lagerschalen hervor. Dabei weisen die Abstützbereiche des Zuspannhebels mittig eine Bohrung auf. Die Lagerschalen weisen mittig je einen Zapfen auf. Die Lagerschalen werden über eine Press- und Passverbindung in die Bohrungen der Abstützbereiche eingesetzt und anschließend eingepresst. Beim Verpressen der Lagerschalen in die Abstützbereiche des Zuspannhebels entsteht, beispielsweise durch ausbrechen der Zapfen der Lagerschalen, ein großer Ausschuss. Zudem fallen viele Lagerschalen nach dem Pressvorgang von den Abstützbereichen der Lagerschale wider ab, wodurch ein noch höherer Ausschuss an Lagerschalen entsteht.

Ausgehend von der DE102010005909A1 ist es die Aufgabe der Erfindung, eine Verbesserung der Verbindung zwischen dem Zuspannhebel und der Lagerschale herzustellen und hohe Ausschusskosten, bedingt durch ein herausfallen der Lagerschalen nach dem Pressvorgang zu senken. Außerdem ist es die Aufgabe der Erfindung die Bearbeitung der Lagerschalenfixierung an dem Zuspannhebel zu verbessern. Die Aufgabe wird dadurch gelöst, dass Taschen an den Seiten eines Zuspannhebelfußes zur Fixierung einer Lagerschale angeordnet sind.

Die WO 96/36819A1 offenbart eine Zuspannvorrichtung für eine Scheibenbremse. Die Zuspannvorrichtung umfasst einen als Zuspannhebelfuß ausgebildeten Exzenter, wobei der Exzenter Lagerschalen zur Lagerung eines Wälzkörpers aufweist. Die Lagerschalen sind ausgestanzte Blechteile und weisen stirnseitig sich radial nach innen erstreckende Vorsprünge auf. Die Vorsprünge der Lagerschalen werden über ein Pressverfahren in stirnseitige Sacklöcher des Exzenters eingepresst.

Besonders bevorzugt sind die Taschen, ausgehend von einer gedachten Achse des Zuspannhebels, achsparallel an den Seiten des Zuspannhebelfußes angeordnet. Die an den Seiten des Zuspannhebelfußes angeordneten Taschen vereinfachen die Verbindung und Arretierung der Lagerschale an dem Zuspannhebelfuß. Auch ein Verdrehen oder eine versetzte Anordnung der Lagerschale an dem Zuspannhebelfuß wird durch die Taschen des Zuspannhebelfußes verhindert. Außerdem werden die Montagekosten durch den Entfall von zwei Bohrungen an dem Zuspannhebelfuß gesenkt. Bevorzugt sind die Taschen des Zuspannhebelfußes achsparallel an dem Zuspannhebelfuß angeordnet.

In einer weiteren vorteilhaften Variante sind die Taschen an dem Zuspannhebelfuß symmetrisch oder asymmetrisch angeordnet. Mit einer asymmetrischen Anordnung der Taschen des Zuspannhebelfußes ist zusätzlich eine Kodierung möglich. Nur eine Lagerschale mit der gleichen Kodierung, wie die Kodierung der Taschen an dem Zuspannhebelfuß, ermöglicht die Montage der Lagerschale.

Es hat sich weiterhin auch als Vorteil erwiesen, dass die Taschen an dem Zuspannhebelfuß angeschmiedet sind. Der Zuspannhebel ist aus einem einzigen Schmiedeteil gebildet. Bei dem Schmiedevorgang des Zuspannhebels werden zusätzlich die Taschen an dem Zuspannhebelfuß angeschmiedet.

In einer weiteren vorteilhaften Ausgestaltung weisen die Taschen in Richtung der dem Bremsbelag abgewandten Seite oder in Richtung der dem Bremsbelag zugewandten Seite eine Öffnung auf. Besonders bevorzugt weisen die Taschen eine Phase zum Einführen der Lagerschale auf. Für die Verbindung der Lagerschalen mit dem Zuspannhebelfuß hat es sich als Vorteil erwiesen, dass die Vertiefung des Zuspannhebelfußes als konkave Vertiefung ausgebildet ist. Die Lagerschalen sind auch konkav ausgebildet, sodass eine passgenaue Verbindung zwischen dem Zuspannhebelfuß und der Lagerschale gewährleistet ist.

In einer weiteren Ausgestaltung weist der Zuspannhebelfuß an der dem Bremsbelag abgewandten Seite oder der dem Bremsbelag zugewandten Seite in der Vertiefung ein Sackloch auf. Das Sackloch wird maschinell beispielsweise mittels einer Bohrmaschine nach dem Schmiedevorgang des Zuspannhebelfußes hergestellt. Es ist aber auch möglich, dass das Sackloch vorgeschmiedet ist, also während des Schmiedevorgangs des Bremssattelfußes mit hergestellt wird. Darüber hinaus weist der Zuspannhebel in einer weiteren vorteilhaften Ausgestaltung einen ersten Zuspannhebelfuß mit einer ersten Tasche und einer zweiten Tasche und einen zweiten Zuspannhebelfuß mit einer dritten Tasche und einer vierten Tasche auf.

Der Zuspannhebel ist gabelförmig ausgestaltet und weist zumindest einen Arm auf an denen je ein Zuspannhebelfuß zur Aufnahme einer Lagerschale angeordnet ist. Besonders bevorzugt weist der Zuspannhebel zwei Arme auf. Die erste Tasche des ersten Zuspannhebelfußes und die zweite Tasche des ersten Zuspannhebelfußes sind achsparallel an dem ersten Zuspannhebelfuß angeordnet. Des Weiteren sind die dritte Tasche des zweiten Zuspannhebelfußes und die vierte Tasche des zweiten Zuspannhbelfußes achsprallel an dem zweiten Zuspannhebelfuß angeordnet.

Die Aufgabe wird zusätzlich dadurch gelöst, dass an den Seiten der Lagerschale Nasen in Richtung des Zuspannhebels angeordnet sind, wobei die Nasen zur Fixierung in den Taschen des Zuspannhebelfußes des Zuspannhebels ausgebildet sind und die Nasen der Lagerschale, ausgehend von einer gedachten Achse der Lagerschale, achsparallel an den Seiten des Zuspannhebelfußes anordenbar sind.

Die Nasen der Lagerschale weisen eine Vorspannung auf, wodurch eine kraftschlüssige Verbindung zwischen der Lagerschale und dem Zuspannhebelfuß hergestellt wird. Für eine Anordnung der Lagerschale an dem Zuspannhebelfuß werden die Nasen der Lagerschale über die Öffnungen der Taschen des Zuspannhebelfußes in die Taschen des Zuspannhebelfußes geschoben, sodass die Nasen der Lagerschale die Lagerschale kraftschlüssig fixieren.

Es hat sich weiterhin gezeigt, dass die Nasen der Lagerschale vorteilhaft symmetrisch oder asymmetrisch angeordnet sind.

Die symmetrische Anordnung der Nasen der Lagerschale oder die asymmetrische Anordnung der Nasen der Lagerschale bilden eine Kodierung, wodurch die Lagerschale einem Zuspannhebel oder einem Zuspannhebelfuß eindeutig zugeordnet werden kann.

Darüber hinaus weisen die Nasen der Lagerschale in einer weiteren Ausführungsform eine Wellenform auf. Die von der Lagerschale abstehenden Enden der Nasen weisen zudem eine Spitze mit einer Zentrierung auf. Über die Wellenform der Nasen der Lagerschale wird eine Vorspannung aufgebaut, die ein kraftschlüssiges Fixieren der Lagerschale an dem Zuspannhebelfuß ermöglicht.

Weiterhin hat es sich in einer Ausbildungsvariante als vorteilhaft erwiesen, dass die Lagerschale an der dem Zuspannhebel zugewandten Seite einen Zapfen aufweist. Der Zapfen der Lagerschale ist achsparallel an der Lagerschale angeordnet. Lagerschale kann aber auch an einem anderen Bereich an der dem Zuspannhebel zugewandten Seite der Lagerschale angeordnet sein.

In einer weiteren Ausgestaltung ist der Zapfen der Lagerschale in einem Sackloch der Vertiefung des Zuspannhebelfußes angeordnet.

Im Falle eines Wegbrechens zumindest einer Nase der Lagerschale, wird die Lagerschale über den Zapfen der Lagerschale an dem Zuspannhebelfuß gesichert.

Zudem weist in einer weiteren Ausführungsvariante die Lagerschale eine halbzylindrische Form auf. Die in Richtung des Zuspannhebelfußes weisende Seite der Lagerschale oder die Lagerschale selbst, kann aber auch eine andere Geometrie aufweisen. Zumindest muss die Geometrie der Fläche der Lagerschale, an dem der Zuspannhebelfuß angeordnet ist, die gleiche Geometrie aufweisen, wie die Fläche des Zuspannhebelfußes, an dem die Lagerschale angeordnet ist.

Nachfolgend werden ausgewählte Ausführungsbeispiele der Erfindung anhand der beigefügten Figuren erläutert.

Es zeigt:
Fig. 1 eine geschnittene Seitenansicht einer Scheibenbremse,
Fig. 2 einen seitlich gedrehten Zuspannhebel ohne Lagerschalen und mit Sacklöchern in dem Zuspannhebelfüßen,
Fig. 2a einen Zuspannhebel in einer Frontalansicht mit Lagerschalen,
Fig. 2b einen Ausschnitt eines Zuspannhebelfußes mit einer Lagerschale nach Fig. 2a,
Fig. 2c eine geschnittene schematische Ansicht eines Zuspannhebelfußes mit einer Lagerschale und einem Sackloch in der Lagerschale,
Fig. 3 eine Lagerschalle mit asymmetrisch angeordneten Nasen in einer seitlich gedrehten Ansicht,
Fig. 3a eine Lagerschale mit asymmetrisch angeordneten Nasen in einer Rückansicht,
Fig. 4 einen Zuspannhebel mit Lagerschalen, wobei die Nasen der Lagerschalen symmetrisch angeordnet sind,
Fig. 5 eine Lagerschale mit symmetrisch angeordneten Nasen in einer seitlich gedrehten Ansicht,
Fig. 5a eine Lagerschale mit symmetrisch angeordneten Nasen in einer Rückansicht,
Fig. 5b eine Lagerschale mit symmetrisch angeordneten Nasen aus einer Draufsicht,
Fig. 6 einen Zuspannhebel ohne Lagerschalen und ohne Sacklöcher in den Vertiefungen der Bremshebelfüße,
Fig. 6a eine geschnittene schematische Ansicht eines Zuspannhebelfußes mit einer Lagerschale und ohne einem Sackloch in der Lagerschale,
Fig. 7 eine Lagerschale ohne einen Zapfen in einer seitlich gedrehten Ansicht,
Fig. 7a eine Lagerschale ohne einen Zapfen in einer Rückansicht.

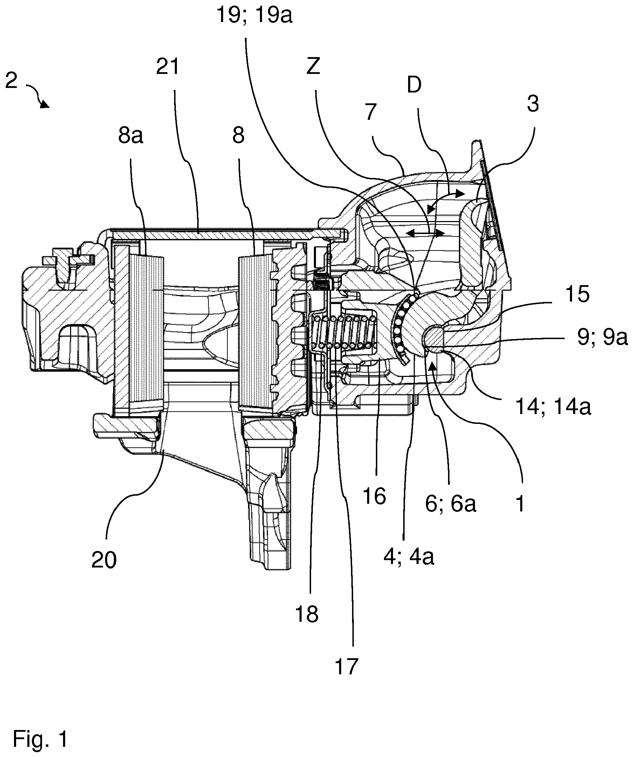

Fig. 1 zeigt eine Scheibenbremse 2 mit einem Bremssattel 7, einem Bremsträger 20 zur Aufnahme von Bremsbelägen 8, 8a, einem Belaghaltebügel 21 der die Bremsbeläge 8, 8a in Position hält und einem Zuspannhebel 3, wobei der Zuspannhebel 3 zwei Zuspannhebelfüße 4, 4a aufweist. Die Zuspannhebelfüße 4, 4a weisen Vertiefungen 9, 9a zur Aufnahme von Lagerschalen 6, 6a auf. Der Zuspannhebel 3 ist innerhalb des Bremssattels 7 der Scheibenbremse 2 angeordnet und stützt sich an der dem Bremsbelag abgewandten Seite über zwei Gleitsteine 14, 14a an einer Innenwand 15 des Bremssattels 7 ab. Die Lagerschalen 6, 6a sind zwischen den Gleitsteinen 14, 14a und den Zuspannhebelfüßen 4, 4a angeordnet. Zudem ermöglichen die Lagerschalen 6, 6a eine Drehbewegung D des Zuspannhebels 3. Der Zuspannhebel 3, die Zuspannhebelfüße 4, 4a, die Lagerschalen 6, 6a, ein Druckstück 16, sowie eine nicht sichtbare Schraube und ein an der Schraube angeordneter nicht sichtbarer Stempel bilden eine Zuspannvorrichtung 1. Die Zuspannvorrichtung 1 spannt die Bremsbeläge 8, 8a in Richtung einer Zuspannbewegung Z zu. Nach einem Zuspannvorgang wird die Zuspannvorrichtung 1 über die Rückstellfeder 17, entgegengesetzt einer Zuspannbewegung Z, in den Ausgangszustand zurückgestellt. Die Rückstellfeder 17 stützt sich in Richtung der Bremsbeläge 8, 8a an einem Verschlussdeckel 18 und in Richtung des Zuspannhebels 3 an dem Druckstück 16 ab. Zwischen dem Druckstück 16 und den Zuspannhebelfüßen 4, 4a sind Gleitlager 19, 19a angeordnet.

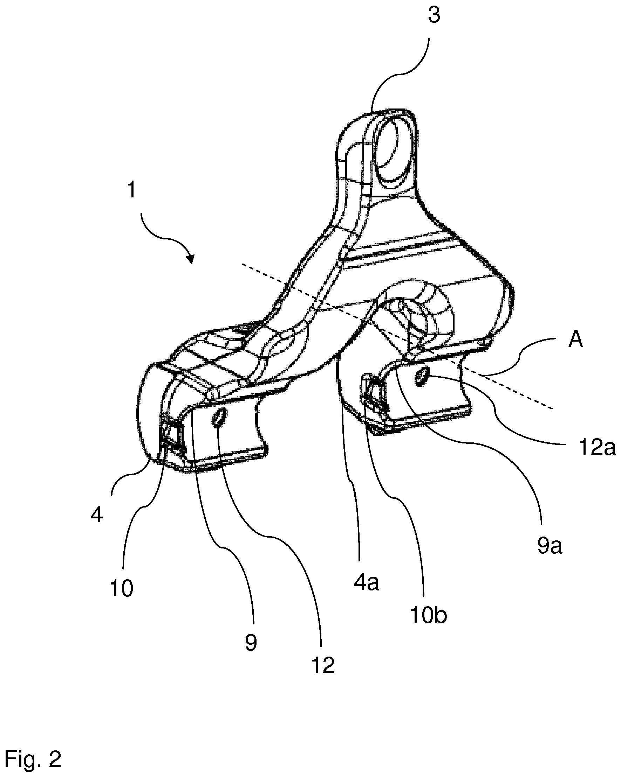

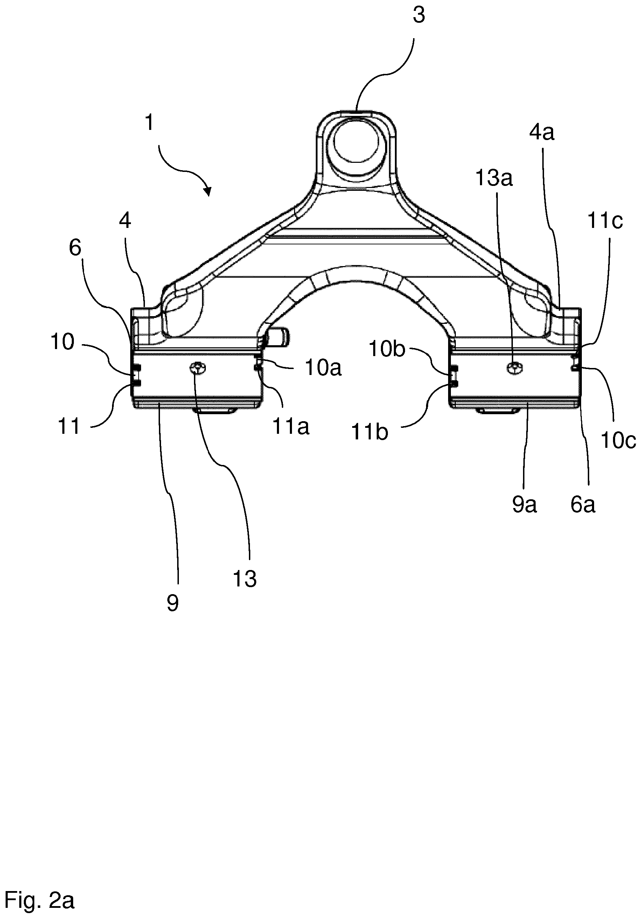

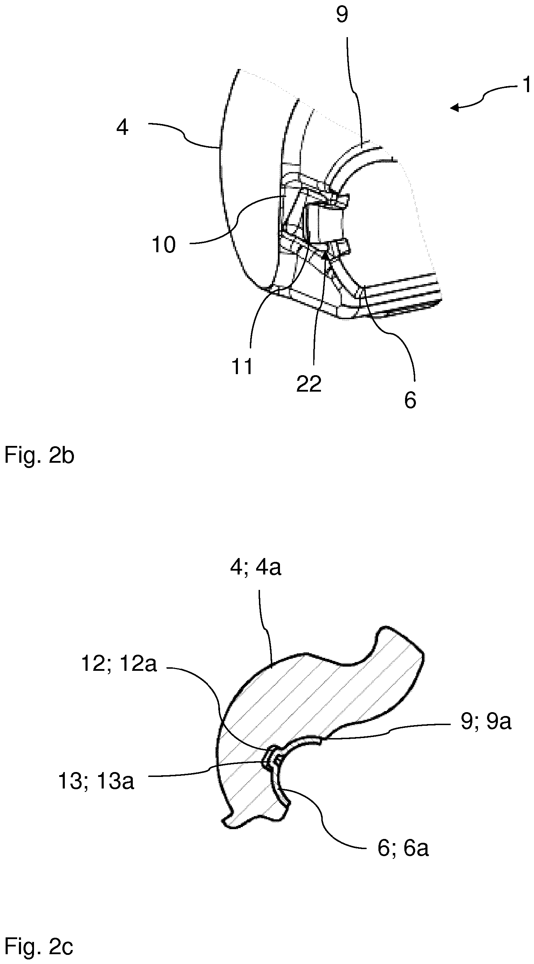

Fig. 2 zeigt einen Zuspannhebel 3 nach Fig. 1 ohne Lagerschalen 6, 6a. An dem ersten Zuspannhebelfuß 4 ist eine erste Tasche 10 des ersten Zuspannhebelfußes 4 zur Fixierung einer ersten Lagerschale 6 (Fig. 1, Fig. 2a) angeordnet. An dem zweiten Zuspannhebelfuß 4a ist eine dritte Tasche 10b des zweiten Zuspannhebelfußes 4a zur Fixierung der zweiten Lagerschale 6a angeordnet. Zusätzlich ist in der ersten Vertiefung 9 des ersten Zuspannhebelfußes 4 ein erstes Sackloch 12 ausgebildet. Ein zweites Sackloch 12a ist in der zweiten Vertiefung 9a des zweiten Zuspannhebelfußes 4a angeordnet. Die Sacklöcher 12, 12a der Vertiefungen 9, 9a der Zuspannhebelfüße 4, 4a nehmen Zapfen 13, 13a (Fig. 2a, Fig. 2c) der Lagerschalen 6, 6a auf. Die Vertiefungen 9, 9a der Zuspannhebelfüße 4, 4a sind konkav ausgebildet und erstrecken sich senkrecht, bezogen auf eine Achse A des Zuspannhebels 3, über die gesamte Breite der Zuspannhebelfüße 4, 4a.

In Fig. 2a ist die Frontalansicht des Zuspannhebels 3 nach Fig. 1 und 2 gezeigt. Der Zuspannhebel 3 weist gegenüber dem Zuspannhebel 3 in Fig. 2 zwei Lagerschalen 6, 6a an den Zuspannhebelfüßen 4, 4a auf. Dabei ist die erste Lagerschale 6 in der ersten Vertiefung 9 des ersten Zuspannhebelfußes 4 angeordnet. Die zweite Lagerschale 6a ist in der zweiten Vertiefung 9a des zweiten Zuspannhebelfußes 4a angeordnet. Deutlich erkennbar ist die asymmetrische Anordnung der Nasen 11 11a der ersten Lagerschale 6 und die asymmetrische Anordnung der Nasen 11b, 11c der zweiten Lagerschale 6a, sowie die asymmetrische Anordnung der Taschen 10, 10a des ersten Zuspanhebelfußes 4 und die asymmetrische Anordnung der Taschen 10b, 10c des zweiten Zuspannhebelfußes 4a. Die erste Nase 11 der ersten Lagerschale 6 ist in einer ersten Tasche 10 des ersten Zuspannhebelfußes 4 fixiert und die zweite Nase 11a der ersten Lagerschale 6 ist in einer zweiten Tasche 10a des ersten Zuspannhebelfußes 4 fixiert. Zudem ist die dritte Nase 11b der zweiten Lagerschale 6a in der dritten Tasche 10b des zweiten Zuspannhebelfußes 4a fixiert und die vierte Nase 11c der zweiten Lagerschale 6a ist in der vierten Tasche 10c des zweiten Zuspannhebelfußes 4a fixiert. Als zusätzliche Sicherung gegen ein lösen der ersten Lagerschale 6 von dem ersten Zuspannhebelfuß 4, ist an der ersten Lagerschale 6 der erste Zapfen 13 in dem ersten Sackloch 12 (Fig. 2) des ersten Zuspannhebelfußes 4 eingebracht. Weiterhin ist zur Sicherung der zweiten Lagerschale 6a der zweite Zapfen 13a der zweiten Lagerschale 6a in dem zweiten Sackloch 12a (Fig. 2) des zweiten Zuspannhebelfußes 4a eingebracht.

In Fig. 2b ist die Fixierung der ersten Lagerschale 6 an dem ersten Zuspannhebelfuß 4 des Zuspannhebels 3 nach Fig. 2a im Detail gezeigt. Insbesondere ist die Anordnung der ersten Nase 11 der ersten Lagerschale 6 in der ersten Tasche 10 des ersten Zuspannhebelfußes 4 gezeigt. Die erste Nase 11 der ersten Lagerschale 6 ist über eine Öffnung 22 der ersten Tasche 10 in die erste Tasche 10 des ersten Zuspanhebelfußes 4 geschoben.

Fig. 2c zeigt den Zuspannhebel 3 nach Fig. 2a, wobei detailliert die Anordnung der Zapfens 13; 13a der Lagerschale 6; 6a in dem Sackloch 12; 12a der Vertiefung 9; 9a des Zuspannhebelfußes 4; 4a gezeigt ist.

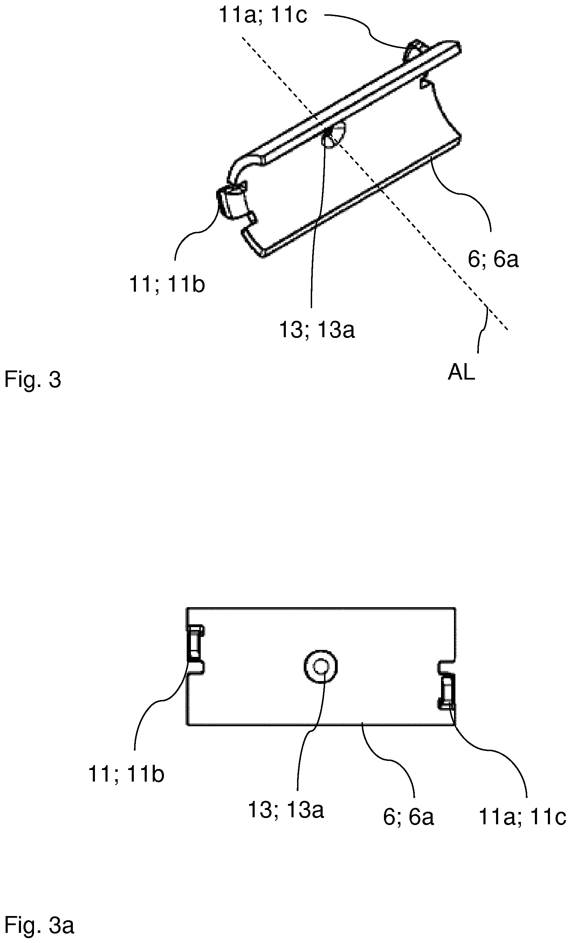

In Fig. 3 ist die Lagerschale 6; 6a mit den zwei asymmetrisch angeordneten Nasen 11; 11b, 11a; 11c nach Fig. 2a ohne den Zuspannhebel 3 gezeigt. Die axiale Richtung der Lagerschale 6; 6a ist durch eine Achse AL der Lagerschale 6, 6a verdeutlicht.

In Fig. 3a ist die Lagerschale 6; 6a mit den zwei asymmetrisch angeordneten Nasen 11; 11b, 11a, 11c nach Fig. 2a und Fig. 3 von der Rückseite der Lagerschale 6; 6a gezeigt. Deutlich zu erkennen ist der koaxial angeordnete Zapfen 13; 13a der Lagerschale 6; 6a.

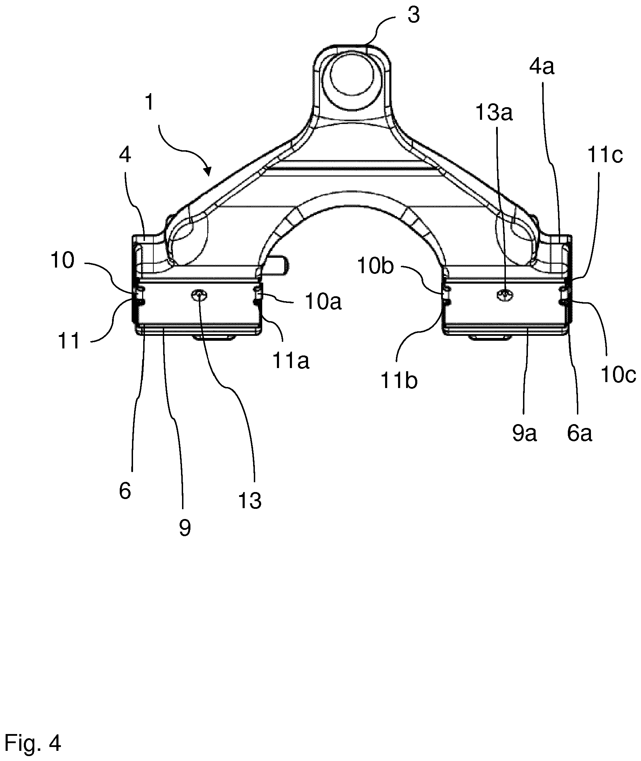

Fig. 4 zeigt einen Zuspannhebel 3 nach Fig. 1 und Fig. 2, wobei die Nasen 11, 11b, 11a, 11c der Lagerschalen 6, 6a und die Taschen 10, 10a, 10b, 10c der Zuspannhebelfüße 4, 4a symmetrisch angeordnet sind. Als zusätzliche Sicherung gegen ein Lösen der ersten Lagerschale 6 von dem ersten Zuspannhebelfuß 4, ist an der ersten Lagerschale 6 der erste Zapfen 13 in dem ersten Sackloch 12 (Fig. 2) des ersten Zuspannhebelfußes 4 eingebracht. Weiterhin ist zur Sicherung der zweiten Lagerschale 6a der zweite Zapfen 13a der zweiten Lagerschale 6a in dem zweiten Sackloch 12a (Fig. 2) des zweiten Zuspannhebelfußes 4a eingebracht.

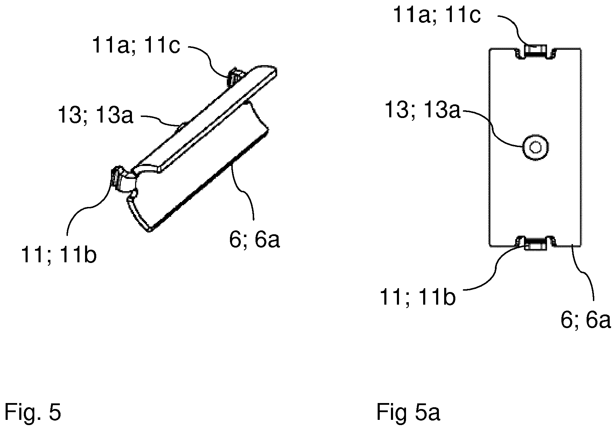

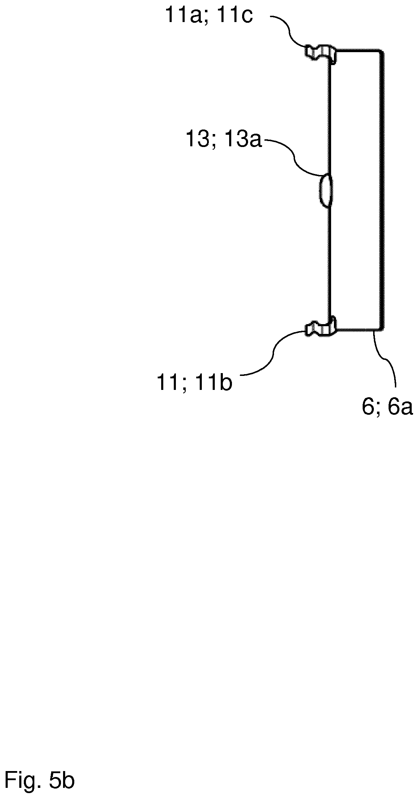

In Fig. 5 ist die Lagerschale 6; 6a mit den symmetrisch angeordneten Nasen 11; 11b, 11a; 11c nach Fig. 4 ohne den Zuspannhebel 3 gezeigt.

Fig. 5a zeigt die Lagerschale 6; 6a nach Fig. 4 und Fig. 5 aus der Rückansicht, wobei der koaxial angeordnete Zapfen 13; 13a der Lagerschale 6; 6a deutlich zu erkennen ist.

Auch Fig. 5b zeigt die Lagerschale 6; 6a nach Fig. 4 bis Fig. 5a. In der

Fig. 5b ist die Lagerschale 6; 6a aus der Draufsicht gezeigt. Insbesondere ist die Wellenform der Nasen 11; 11b, 11a; 11c der Lagerschale 6; 6a erkennbar.

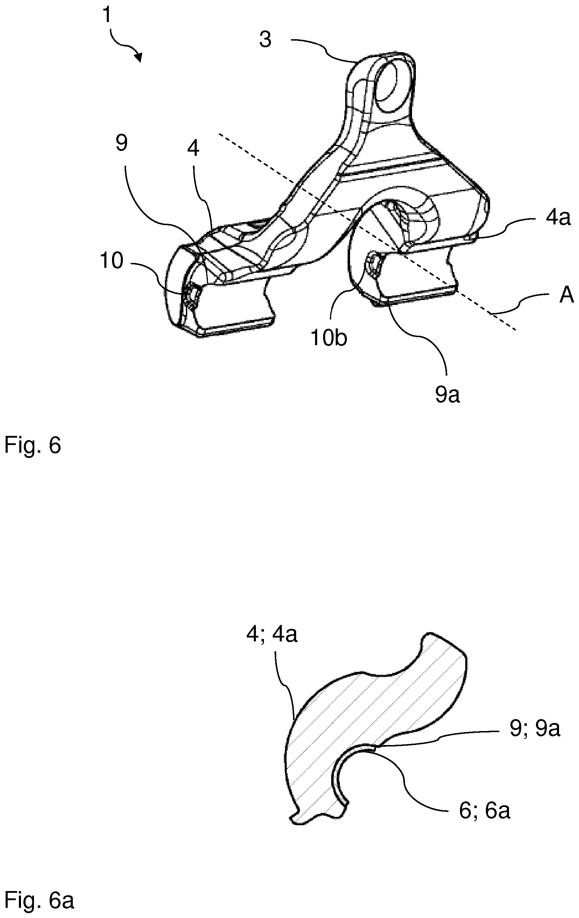

In Fig. 6 ist der Zuspannhebel 3 nach Fig. 1 und Fig. 2 gezeigt. Entgegen Fig. 2 weisen die Vertiefungen 9, 9a der Zuspannhebelfüße 4, 4a keine Sacklochbohrungen 12, 12a auf.

Fig. 6a verdeutlicht die Anordnung der Lagerschale 6; 6a in der Vertiefung 9; 9a des Zuspannhebelfußes 4; 4a gemäß der Ausführung des Zuspannhebels 3 nach Fig. 6.

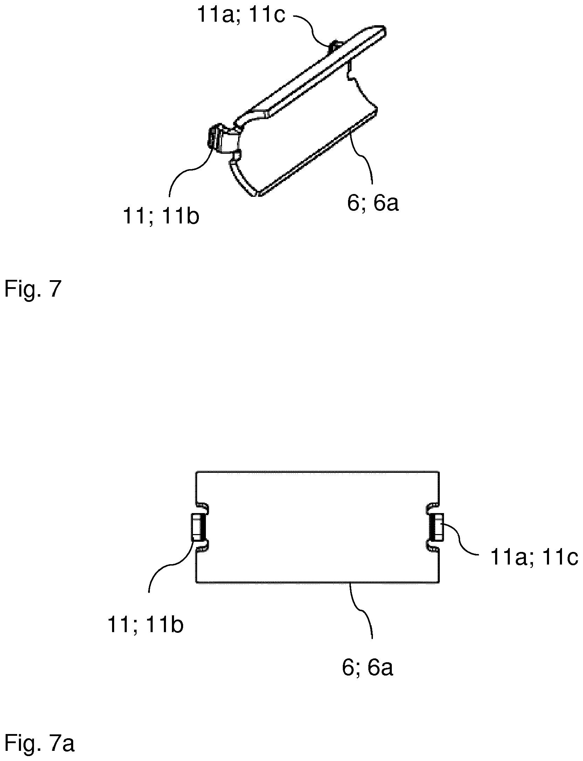

Eine entsprechende Lagerschale 6; 6a für einen Zuspannhebel 3 nach Fig. 6 ist in Fig. 7 gezeigt. Die Lagerschale 6; 6a weist zwei symmetrisch angeordnete Nasen 11; 11b, 11a; 11c auf. Ein zusätzlicher Zapfen 13; 13a der Lagerschale 6; 6a ist nicht vorhanden.

Fig. 7a zeigt noch einmal die Rückseite der Lagerschale 6; 6a nach Fig. 7. Deutlich erkennbar ist, dass die Lagerschale 6; 6a keinen Zapfen 13; 13a aufweist.

### Bezugszeichenliste als Teil der Beschreibung

- 1: Zuspannvorrichtung
- 2: Scheibenbremse
- 3: Zuspannhebel
- 4: erster Zuspannhebelfuß
- 4a: zweiter Zuspannhebelfuß
- 6, 6a: Lagerschale
- 7: Bremssattel
- 8, 8a: Bremsbelag
- 9, 9a: Vertiefung des Zuspannhebelfußes 4, 4a
- 10: erste Tasche des Zuspannhebelfußes 4
- 10a: zweite Tasche des Zuspannhebelfußes 4
- 10b: dritte Tasche des Zuspannhebelfußes 4a
- 10c: vierte Tasche des Zuspannhebelfußes 4a
- 11-11c: Nase der Lagerschale 6, 6a
- 12, 12a: Sackloch der Vertiefung 9, 9a des Zuspannhebelfußes 4, 4a
- 13, 13a: Zapfen der Lagerschale 6, 6a
- 14, 14a: Gleitstein
- 15: Innenwand des Bremssattels 7
- 16: Druckstück
- 17: Rückstellfeder
- 18: Verschlussdeckel
- 19, 19a: Gleitlager
- 20: Bremsträger
- 21: Belaghaltebügel
- 22: Öffnung der ersten Tasche 10 des ersten Zusapannhebelfußes 4
- A: Achse des Zuspannhebels 3
- AL: Achse der Lagerschale
- D: Drehbewegung des Zuspannhebels 3
- Z: Zuspannbewegung

## Patentansprüche

1. Zuspannvorrichtung (1) für eine Scheibenbremse (2), insbesondere für eine Gleitsattelscheibenbremse zum Zuspannen einer Bremsscheibe, wobei die Scheibenbremse (2) zumindest einen Bremssattel (7) zur Aufnahme der Zuspannvorrichtung (1) und Bremsbeläge (8, 8a) zum Zuspannen der Bremsscheibe aufweist und die Zuspannvorrichtung (1) einen Zuspannhebel (3) mit zumindest einem Zuspannhebelfuß (4, 4a) umfasst, wobei der Zuspannhebelfuß (4, 4a) in Richtung der dem Bremsbelag (8, 8a) zugewandten Seite oder der dem Bremsbelag (8, 8a) abgewandten Seite eine Vertiefung (9, 9a) zur Aufnahme einer Lagerschale (6, 6a) aufweist, **dadurch gekennzeichnet, dass** an den Seiten des Zuspannhebelfußes (4, 4a) Taschen (10, 10a, 10b, 10c) zur Fixierung der Lagerschale (6, 6a) angeordnet sind.

2. Zuspannvorrichtung (1) nach Anspruch 1, **dadurch gekennzeichnet, dass** die Taschen (10, 10a, 10b, 10c) an dem Zuspannhebelfuß (4, 4a) symmetrisch oder asymmetrisch angeordnet sind.

3. Zuspannvorrichtung (1) nach Anspruch 1 oder 2, **dadurch gekennzeichnet, dass** die Taschen (10, 10a, 10b, 10c) an dem Zuspannhebelfuß (4, 4a) angeschmiedet sind.

4. Zuspannvorrichtung (1) nach einem der vorangegangenen Ansprüche, **dadurch gekennzeichnet, dass** die Taschen (10, 10a, 10b, 10c) in Richtung der dem Bremsbelag (8, 8a) abgewandten Seite oder in Richtung der dem Bremsbelag (8, 8a) zugewandten Seite eine Öffnung aufweisen.

5. Zuspannvorrichtung (1) nach einem der vorangegangenen Ansprüche, **dadurch gekennzeichnet, dass** die Vertiefung (9, 9a) des Zuspannhebelfußes (4, 4a) als konkave Vertiefung ausgebildet ist.

6. Zuspannvorrichtung (1) nach einem der vorangegangenen Ansprüche, **dadurch gekennzeichnet, dass** der Zuspannhebelfuß (4, 4a) an der dem Bremsbelag (8, 8a) abgewandten Seite oder der dem Bremsbelag zugewandten Seite in der Vertiefung (9, 9a) ein Sackloch (12, 12a) aufweist.

7. Zuspannvorrichtung (1) nach einem der vorangegangenen Ansprüche, **dadurch gekennzeichnet, dass** der Zuspannhebel (3) einen ersten Zuspannhebelfuß (4) mit einer ersten Tasche (10) und einer zweiten Tasche (10a) aufweist und dass der Zuspannhebel (3) einen zweiten Zuspannhebelfuß (4a) mit einer dritten Tasche (10b) und einer vierten Tasche (10c) aufweist.

8. Lagerschale (6, 6a) für eine Zuspannvorrichtung (1) einer Scheibenbremse (2), insbesondere einer Gleitsattelscheibenbremse, wobei die Scheibenbremse (2) zumindest einen Bremssattel (7) zur Aufnahme der Zuspannvorrichtung (1) und Bremsbeläge (8, 8a) zum Zuspannen der Bremsscheibe aufweist und die Zuspannvorrichtung (1) einen Zuspannhebel (3) mit zumindest einem Zuspannhebelfuß (4, 4a) umfasst, wobei der Zuspannhebelfuß (4, 4a) in Richtung der dem Bremsbelag (8, 8a) zugewandten Seite oder der dem Bremsbelag (8, 8a) abgewandten Seite eine Vertiefung (9, 9a) zur Aufnahme der Lagerschale (6, 6a) aufweist, **dadurch gekennzeichnet, dass** an den Seiten der Lagerschale (6, 6a) Nasen (11, 11a, 11b, 11c) in Richtung des Zuspannhebels (3) angeordnet sind und die Zuspannvorrichtung 1 nach einem der Ansprüche 1 bis 6 ausgebildet ist, wobei die Nasen (11, 11a, 11b, 11c) der Lagerschale (6, 6a) zur Fixierung in den Taschen (10, 10a, 10b, 10c) des Zuspannhebelfußes (4, 4a) des Zuspannhebels (3) ausgebildet sind und wobei die Taschen (10, 10a, 10b, 10c) der Lagerschale (6, 6a), ausgehend von einer gedachten Achse der Lagerschale (6, 6a), achsparallel an den Seiten des Zuspannhebelfußes (4, 4a) angeordnet sind.

9. Lagerschale (6, 6a) nach Anspruch 8, **dadurch gekennzeichnet, dass** die Nasen (11, 11a, 11b, 11c) der Lagerschale (6, 6a) symmetrisch oder asymmetrisch angeordnet sind.

10. Lagerschale (6, 6a) nach einem der Ansprüche 8 bis 9, **dadurch gekennzeichnet, dass** die Nasen (11, 11a, 11b, 11c) der Lagerschalen (6, 6a) eine Wellenform aufweisen.

11. Lagerschale (6, 6a) nach einem der Ansprüche 8 bis 10, **dadurch gekennzeichnet, dass** die Lagerschale (6, 6a) an der dem Zuspannhebel (3) zugewandten Seite einen Zapfen (13, 13a) aufweist.

12. Lagerschale (6, 6a) nach einem der Ansprüche 8 bis 11, **dadurch gekennzeichnet, dass** der Zapfen (13, 13a) der Lagerschale (6, 6a) in einem Sacklock (12, 12a) der Vertiefung (9, 9a) des Zuspannhebelfußes (4, 4a) angeordnet ist.

13. Lagerschale (6, 6a) nach einem der Ansprüche 8 bis 12, **dadurch gekennzeichnet, dass** die Lagerschale (6, 6a) eine halbzylindrische Form aufweist.

## Claims

1. A closing device (1) for a disc brake (2), in particular for a sliding caliper disc brake for closing a brake disc, wherein the disc brake (2) has at least one brake caliper (7) for receiving the closing device (1) and brake linings (8, 8a) for closing the brake disc and the closing device (1) comprises a closing lever (3) having at least one closing lever base (4, 4a), wherein the closing lever base (4, 4a) has a recess (9, 9a) for receiving a bearing shell (6a, 6a) in the direction of the side facing the brake lining (8, 8a) or the side averted from the brake lining (8, 8a), **characterized in that** pockets (10, 10a, 10b, 10c) are arranged at the sides of the closing lever base (4, 4a) for fixing the bearing shell (6, 6a).

2. The closing device (1) according to claim 1, **characterized in that** the pockets (10, 10a, 10b, 10c) are arranged symmetrically or asymmetrically on the closing lever base (4, 4a).

3. The closing device (1) according to claim 1 or 2, **characterized in that** the pockets (10, 10a, 10b, 10c) are forged on the closing lever base (4, 4a).

4. The closing device (1) according to any of the foregoing claims, **characterized in that** the pockets (10, 10a, 10b, 10c) have an opening in the direction of the side averted from the brake lining (8, 8a) or in the direction of the side facing the brake lining (8, 8a).

5. The closing device (1) according to any of the foregoing claims, **characterized in that** the recess (9, 9a) of the closing lever base (4, 4a) is embodied as a concave recess.

6. The closing device (1) according to any of the foregoing claims, **characterized in that** the closing lever base (4, 4a) has a blind hole (12, 12a) in the recess (9, 9a) on the side averted from the brake lining (8, 8a) or on the side facing the brake lining.

7. The closing device (1) according to any of the foregoing claims, **characterized in that** the closing lever (3) has a first closing lever base (4) with a first pocket (10) and a second pocket (10a) and that the closing lever (3) has a second closing lever base (4a) with a third pocket (10b) and a fourth pocket (10c).

8. A bearing shell (6, 6a) for a closing device (1) of a brake disc (2), in particular of a sliding caliper brake disc, wherein the brake disc (2) has at least one brake caliper (7) for receiving the closing device (1) and brake linings (8, 8a) for closing the brake disc and the closing device (1) comprises a closing lever (3) with at least one closing lever base (4, 4a), wherein the closing lever base (4, 4a) has a recess (9, 9a) for receiving the bearing shell (6, 6a) in the direction of the side facing the brake lining (8, 8a) or the side averted from the brake lining (8, 8a), **characterized in that** lugs (11, 11a, 11b, 11c) are arranged on the sides of the bearing shell (6, 6a) in the direction of the closing lever (3) and the closing device (1) is embodied according to any of claims 1 to 6, wherein the lugs (11, 11a, 11b, 11c) of the bearing shell (6, 6a) are embodied for fixation in the pockets (10, 10a, 10b, 10c) of the closing lever base (4, 4a) of the closing lever (3) and wherein the lugs (11, 11a, 11b, 11c) of the bearing shell (6, 6a), proceeding from an imaginary axis of the bearing shell (6, 6a), can be arranged axis parallel on the sides of the closing lever base (4, 4a).

9. The bearing shell (6, 6a) according to claim 8, **characterized in that** the lugs (11, 11a, 11b, 11c) of the bearing shell (6, 6a) are arranged symmetrically or asymmetrically.

10. The bearing shell (6, 6a) according to any of claims 8 to 9, **characterized in that** the lugs (11, 11a, 11b, 11c) of the bearing shells (6, 6a) have a wave form.

11. The bearing shell (6, 6a) according to any of claims 8 to 10, **characterized in that** the bearing shell (6, 6a) has a stud (13, 13a) on the side facing the closing lever (3).

12. The bearing shell (6, 6a) according to any of claims 8 to 11, **characterized in that** the stud (13, 13a) of the bearing shell (6, 6a) is arranged in a blind hole (12, 12a) of the recess (9, 9a) of the closing lever base (4, 4a).

13. The bearing shell (6, 6a) according to any of claims 8 to 12, **characterized in that** the bearing shell (6, 6a) has a semi-cylindrical shape.

## Revendications

1. Dispositif d'application (1) pour un frein à disque (2), en particulier pour un frein à disque d'étrier de glissement afin d'appliquer un disque de frein, dans lequel le frein à disque (2) présente au moins un étrier de frein (7) pour recevoir le dispositif d'application (1) et des garnitures de frein (8, 8a) pour appliquer le disque de frein, et le dispositif d'application (1) comprend un levier d'application (3) avec au moins un pied de levier d'application (4 , 4a), dans lequel le levier d'application (4, 4a) présente, dans la direction du côté tourné vers la garniture de frein (8 , 8a) ou du côté opposé à la garniture de frein (8, 8a), un renfoncement (9 , 9a) pour recevoir un coussinet de palier (6, 6a), **caractérisé en ce que** sur les côtés du pied de levier d'application (4 , 4a) sont agencées des poches (10, 10a, 10b, 10c) pour fixer le coussinet de palier (6 , 6a).

2. Dispositif d'application (1) selon la revendication 1, **caractérisé en ce que** les poches (10, 10a, 10b, 10c) sont agencées de façon symétrique ou asymétrique au niveau du pied de levier d'application (4, 4a).

3. Dispositif d'application (1) selon la revendication 1 ou 2, **caractérisé en ce que** les poches (10, 10a, 10b, 10c) sont forgées sur le pied de levier d'application (4 , 4a).

4. Dispositif d'application (1) selon l'une des revendications précédentes, **caractérisé en ce que** les poches (10, 10a , 10b, 10c) présentent une ouverture dans la direction du côté opposé à la garniture de frein (8 , 8a) ou dans la direction du côté tourné vers la garniture de frein (8 , 8a).

5. Dispositif d'application (1) selon l'une des revendications précédentes, **caractérisé en ce que** le renfoncement (9 , 9a) du pied de levier d'application (4 , 4a) est conçu en tant que renfoncement concave.

6. Dispositif d'application (1) selon l'une des revendications précédentes, **caractérisé en ce que** le pied de levier d'application (4, 4a) présente un trou borgne (12 , 12a) dans le renfoncement (9 , 9a), sur le côté opposé à la garniture de frein (8, 8a) ou le côté tourné vers la garniture de frein.

7. Dispositif d'application (1) selon l'une des revendications précédentes, **caractérisé en ce que** le levier d'application (3) présente un premier pied de levier d'application (4) avec une première poche (10) et une deuxième poche (10a), et **en ce que** le levier d'application (3) présente un second pied de levier d'application (4a) avec une troisième poche (10b) et une quatrième poche (10c).

8. Coussinet de palier (6, 6a) pour un dispositif d'application (1) d'un frein à disque (2), en particulier d'un frein à disque d'étrier de glissement, dans lequel le frein à disque (2) présente au moins un étrier de frein (7) pour recevoir le dispositif d'application (1) et des garnitures de frein (8, 8a) pour appliquer le disque de frein, et le dispositif d'application (1) comprend un levier d'application (3) avec au moins un pied de levier d'application (4, 4a), dans lequel le pied de levier d'application (4, 4a) présente, dans la direction du côté tourné vers la garniture de frein (8 , 8a) ou du côté opposé à la garniture de frein (8 , 8a), un renfoncement (9 , 9a) pour recevoir le coussinet de palier (6, 6a), **caractérisé en ce que** des ergots (11, 11a, 11b, 11c) sont agencés dans la direction du levier d'application (3) sur les côtés du coussinet de palier (6, 6a), et le dispositif d'application (1) est conçu selon l'une des revendications 1 à 6, dans lequel les ergots (11, 11a, 11b, 11c) du coussinet de palier (6, 6a) sont conçus pour être fixés dans les poches (10, 10a, 10b, 10c) du pied de levier d'application (4, 4a) du levier d'application (3) et dans lequel les ergots (11, 11a, 11b, 11c) du coussinet de palier (6, 6a) peuvent être agencés, partant d'un axe imaginaire du coussinet de palier (6, 6a), axialement parallèles à l'axe sur les côtés du pied de levier d'application (4 , 4a).

9. Coussinet de palier (6 , 6a) selon la revendication 8, **caractérisé en ce que** les ergots (11, 11a, 11b, 11c) du coussinet de palier (6, 6a) sont agencés de façon symétrique ou asymétrique.

10. Coussinet de palier (6, 6a) selon l'une des revendications 8 à 9, **caractérisé en ce que** les ergots (11, 11a, 11b, 11c) des coussinets de palier (6 , 6a) présentent une forme ondulée.

11. Coussinet de palier (6, 6a) selon l'une des revendications 8 à 10, **caractérisé en ce que** le coussinet de palier (6, 6a) présente un tenon (13, 13a) sur le côté tourné vers le levier d'application (3).

12. Coussinet de palier (6, 6a) selon l'une des revendications 8 à 11, **caractérisé en ce que** le tenon (13 , 13a) du coussinet de palier (6 , 6a) est agencé dans un trou borgne (12 , 12a) du renfoncement (9 , 9a) du pied de levier d'application (4 , 4a).

13. Coussinet de palier (6, 6a) selon l'une des revendications 8 à 12, **caractérisé en ce que** le coussinet de palier (6 , 6a) présente une forme semi-cylindrique.
